# FASCICULE DE BREVET EUROPEEN

(11) **EP 3 475 953 B1**
(45) Date de publication et mention de la délivrance du brevet: **08.04.2020**
(21) Numéro de dépôt: 17730218.9
(22) Date de dépôt: 20.06.2017
(51) Int. Cl.: G21D 3/00

(54) **PROCÉDÉ DE CALCUL D'UNE MARGE IPG ASSOCIÉE À UN PLAN DE CHARGEMENT D'UN RÉACTEUR NUCLÉAIRE, SYSTÈME, PROGRAMME D'ORDINATEUR ET SUPPORT ASSOCIÉS**
VERFAHREN ZUR BERECHNUNG EINES PCI-VORHALTS IM ZUSAMMENHANG MIT EINEM LADUNGSMUSTER EINES KERNREAKTORS, ZUGEHÖRIGES SYSTEM, COMPUTERPROGRAMM UND MEDIUM
METHOD FOR CALCULATING A PCI MARGIN ASSOCIATED WITH A LOADING PATTERN OF A NUCLEAR REACTOR, ASSOCIATED SYSTEM, COMPUTER PROGRAM AND MEDIUM

(30) Priorité: 22.06.2016 FR 1601000
(43) Date de publication de la demande: 01.05.2019
(73) Titulaire: FRAMATOME, 92400 Courbevoie (FR)
(72) Inventeur: ANDRE POYAUD, Gilles, 69005 Lyon (FR); GALLAND, Isabelle, 69003 Lyon (FR)
(74) Mandataire: Lavoix
(86) Numéro de dépôt international: PCT/EP2017/065110
(87) Numéro de publication internationale: WO 2017/220592

(56) Documents cités:
- US-A1- 2009 080 585
- US-A1- 2011 246 153
- ZHOU ET AL: "Modelling of pellet clad interaction during power ramps", PELLET-CLAD INTERACTION IN WATER REACTOR FUELS,, 11 mars 2004 (2004-03-11), pages 519-530, XP009121335,

## Description

La présente invention concerne un procédé de calcul d'une marge IPG associée à un plan de chargement d'un réacteur nucléaire comprenant un cœur dans lequel des assemblages de combustible sont chargés, les assemblages de combustible comprenant des crayons de combustible comportant chacun des pastilles de combustible nucléaire et une gaine entourant les pastilles.

La présente invention concerne également un système électronique de calcul associé, et un programme d'ordinateur comportant des instructions logicielles qui, lorsqu'elles sont exécutées par un ordinateur, mettent en oeuvre un tel procédé.

L'invention s'applique, par exemple, aux réacteurs nucléaires à eau légère qu'ils soient à eau pressurisée ou à eau bouillante.

Un grand nombre de ces réacteurs sont actuellement exploités dans le monde.

Il peut être utile, notamment dans des pays comme la France où plus de 50% de l'électricité est produite par des réacteurs nucléaires, que la puissance globale fournie par ces réacteurs varie afin de s'adapter aux besoins du réseau électrique qu'ils alimentent.

En particulier, il est souhaitable de pouvoir faire fonctionner les réacteurs nucléaires à une puissance intermédiaire pendant une période au cours de laquelle la demande du réseau est faible, typiquement de quelques jours à moins de 2 mois, avant de revenir à la puissance nominale.

Pour autant, une telle exploitation d'un réacteur nucléaire, qui permettrait de mieux exploiter ses capacités, ne doit pas induire de problème de sûreté, notamment en cas de transitoire de fonctionnement accidentel pouvant intervenir par exemple pendant, ou peu de temps après, le fonctionnement à puissance intermédiaire.

Un but de l'invention est de résoudre ce problème en fournissant un procédé permettant de calculer une marge IPG associée à un plan de chargement d'un réacteur nucléaire, permettant de mieux exploiter les capacités du réacteur, tout en conservant un fonctionnement sûr.

A cet effet, l'invention a pour objet un procédé de calcul d'une marge IPG associée à un plan de chargement d'un réacteur nucléaire comprenant un cœur dans lequel des assemblages de combustible sont chargés suivant le plan de chargement, les assemblages de combustible comprenant des crayons de combustible comportant chacun des pastilles de combustible nucléaire et une gaine entourant les pastilles,
le procédé étant mis en œuvre par un système électronique et comprenant les étapes de :
- b) calculer une marge IPG principale de référence pour un plan de référence de chargement des assemblages de combustible dans le cœur,
- c) calculer une marge IPG secondaire de référence pour le plan de référence,
- d) calculer une marge IPG secondaire modifiée pour un plan modifié de chargement des assemblages de combustible dans le cœur,
- e) calculer une marge IPG principale modifiée pour le plan modifié, en fonction d'une comparaison de la marge IPG secondaire modifiée avec la marge IPG secondaire de référence.

Le procédé de calcul selon l'invention permet alors de calculer la valeur de la marge IPG de manière plus précise, en prenant en compte une variabilité des plans de chargement des assemblages de combustible dans le cœur d'un réacteur nucléaire pour un cycle d'irradiation donné, par rapport à un plan de référence.

Le plan de référence définit par exemple un chargement nominal, également appelé chargement à l'équilibre, suivant lequel, d'un cycle d'irradiation à l'autre, les assemblages de combustible présents dans le cœur sont similaires, notamment en termes d'enrichissement initial de la matière nucléaire, et sont chargés dans le cœur selon un plan de chargement reproductible. Le plan de référence correspond alors à un cycle de fonctionnement du réacteur appelé cycle à l'équilibre.

Le plan modifié permet d'apporter de la flexibilité par rapport au plan de référence : il définit par exemple un chargement de transition vers ou depuis le chargement nominal, tel qu'un chargement correspondant au démarrage d'un premier cœur, à une montée à l'équilibre, à un changement de gestion du fonctionnement du réacteur, ou encore à un cycle de fin de vie de réacteur, ou une variation par rapport au plan de référence. Le plan modifié est également appelé plan de flexibilité.

Le plan modifié est alors distinct du plan de référence de par au moins un assemblage de combustible 16 chargé dans le cœur, certains assemblages de combustible 16 n'étant, par exemple, pas chargés dans le cœur suivant le plan modifié de chargement et étant remplacés par des assemblages de combustible différents, par exemple de par la nature de la matière fissile ou son enrichissement ou l'historique d'irradiation des assemblages de combustible de remplacement.

En variante, les assemblages de combustible 16 chargés dans le cœur 2 sont identiques entre le plan modifié et le plan de référence, le plan modifié étant alors distinct du plan de référence seulement de par la position d'au moins deux assemblages de combustible 16 dans le cœur 2.

Suivant d'autres aspects avantageux de l'invention, le procédé comprend l'une ou plusieurs des caractéristiques suivantes, prise(s) isolément ou selon toutes les combinaisons techniquement possibles :
- lorsque la marge IPG secondaire modifiée est supérieure ou égale à la marge IPG secondaire de référence, la marge IPG principale modifiée est égale à la marge IPG principale de référence ; et lorsque la marge IPG secondaire modifiée est inférieure à la marge IPG secondaire de référence, la marge IPG principale modifiée est inférieure à la marge IPG principale de référence ;
- lorsque la marge IPG secondaire modifiée est inférieure à la marge IPG secondaire de référence, la marge IPG principale modifiée est égale à la marge IPG principale de référence réduite par un facteur correctif fonction de l'écart entre la marge IPG secondaire modifiée et la marge IPG secondaire de référence ;
- le facteur correctif est fonction d'un ratio entre la marge IPG secondaire modifiée et la marge IPG secondaire de référence et est strictement compris entre 0 et 1 ;
- l'étape b) comprend les sous-étapes de :
   b1) simuler au moins un transitoire de fonctionnement du réacteur nucléaire,
   b2) calculer la valeur atteinte par une grandeur physique au cours du transitoire de fonctionnement dans au moins une partie d'une gaine d'un crayon de combustible, et
   b3) déterminer, en tant que marge IPG principale de référence, l'écart entre la valeur maximale atteinte par ladite valeur calculée à la sous-étape b2) au cours du transitoire et une limite technologique du crayon de combustible ;
- le transitoire simulé à la sous-étape b1) est un transitoire choisi parmi le groupe consistant en : une augmentation excessive de charge, un retrait incontrôlé d'au moins un groupe de grappes de commande, une chute de l'une des grappes de commande, et une dilution incontrôlée d'acide borique ;
- le procédé comprend, avant l'étape b), l'étape de : a) déterminer une valeur de rupture de la grandeur physique caractérisant une rupture de la gaine ;
- l'étape a) comporte :
   + soumettre des crayons de combustible préalablement irradiés à des rampes de puissance nucléaire expérimentales,
   + calculer les valeurs atteintes par la grandeur physique dans au moins une gaine rompue lors d'une rampe de puissance, et
   + sélectionner la valeur de rupture comme étant la valeur minimale parmi les valeurs atteintes calculées ;
- chacune des étapes c) et d) comporte, pour chaque assemblage de combustible, les sous-étapes de :
   i) simuler une évolution du fonctionnement du réacteur nucléaire en appliquant à des crayons de combustible une rampe de puissance nucléaire depuis la puissance nulle,
   ii) calculer les valeurs atteintes par une grandeur physique dans les gaines des crayons de combustible,
   iii) comparer les valeurs atteintes à la valeur de rupture
   iv) déterminer une puissance à rupture égale :
      I) à la puissance associée à la valeur rupture, si une valeur minimale parmi les valeurs atteintes calculées à la sous-étape ii) est supérieure à la valeur de rupture, ou
      II) à l'infini, si aucune valeur, parmi les valeurs atteintes calculées à la sous-étape ii), n'est supérieure à la valeur de rupture,
   v) évaluer une marge en puissance par différence entre la puissance à rupture déterminée à la sous-étape iv) et une puissance maximale estimée en l'assemblage de combustible,
      la marge IPG secondaire correspondante, calculée lors de chacune des étapes c) et d), est égale à la marge minimale parmi les marges en puissance évaluées pour les assemblages de combustible à la sous-étape v) ;
- des calculs neutroniques et des calculs thermomécaniques sont effectués pour calculer chaque marge IPG, et les calculs neutroniques et les calculs thermomécaniques sont couplés pour le calcul d'une marge IPG principale correspondante, les calculs thermomécaniques étant découplés des calculs neutroniques pour le calcul d'une marge IPG secondaire correspondante ;
- le procédé comprend en outre l'étape de : f) déterminer une valeur limite de déclenchement d'un arrêt d'urgence et/ou d'une alarme à partir de la marge IPG principale calculée et pour le plan considéré de chargement des assemblages de combustible dans le coeur ;
- la grandeur physique est choisie parmi le groupe consistant en : une contrainte ou une fonction de contrainte(s) dans la gaine ; et une densité d'énergie de déformation dans la gaine ;
- le procédé comprend en outre faire fonctionner le réacteur nucléaire en utilisant la marge IPG principale calculée pour le plan considéré de chargement des assemblages de combustible dans le cœur.

L'invention a également pour objet un programme d'ordinateur comportant des instructions logicielles qui, lorsqu'elles sont exécutées par un ordinateur, mettent en œuvre un procédé tel que défini ci-dessus.

L'invention a en outre pour objet un système électronique de calcul d'une marge IPG associée à un plan de chargement d'un réacteur nucléaire, comprenant un cœur dans lequel des assemblages de combustible sont chargés suivant le plan de chargement, les assemblages de combustible comprenant des crayons de combustible comportant chacun des pastilles de combustible nucléaire et une gaine entourant les pastilles,
le système comprenant :
- un premier module de calcul configuré pour calculer une marge IPG principale de référence pour un plan de référence de chargement des assemblages de combustible dans le cœur,
- un deuxième module de calcul configuré pour calculer, d'une part, une marge IPG secondaire de référence pour le plan de référence, et d'autre part, une marge IPG secondaire modifiée pour un plan modifié de chargement des assemblages de combustible dans le cœur,
- un module de comparaison configuré pour comparer la marge IPG secondaire modifiée avec la marge IPG secondaire de référence,
le module de comparaison étant configuré en outre pour calculer une marge IPG principale modifiée pour le plan modifié, en fonction de ladite comparaison de la marge IPG secondaire modifiée avec la marge IPG secondaire de référence.

L'invention sera mieux comprise à la lecture de la description qui va suivre, donnée uniquement à titre d'exemple non limitatif, et faite en se référant aux dessins annexés, sur lesquels :
- la figure 1 est une vue schématique illustrant un réacteur nucléaire à eau pressurisée ;
- la figure 2 est une vue schématique latérale d'un assemblage de combustible du cœur du réacteur de la figure 1 ;
- la figure 3 est une vue schématique en coupe longitudinale d'un crayon de combustible de l'assemblage de la figure 2 ;
- la figure 4 est un schéma bloc d'un système électronique de calcul d'une marge IPG associée à un plan de chargement du réacteur de la figure 1 ;
- la figure 5 est un organigramme du procédé de calcul d'une marge IPG associée à un plan de chargement du réacteur nucléaire, mis en oeuvre par le système électronique de la figure 4 ; et
- la figure 6 est une courbe illustrant la simulation d'une rampe de puissance pour déterminer une puissance à rupture.

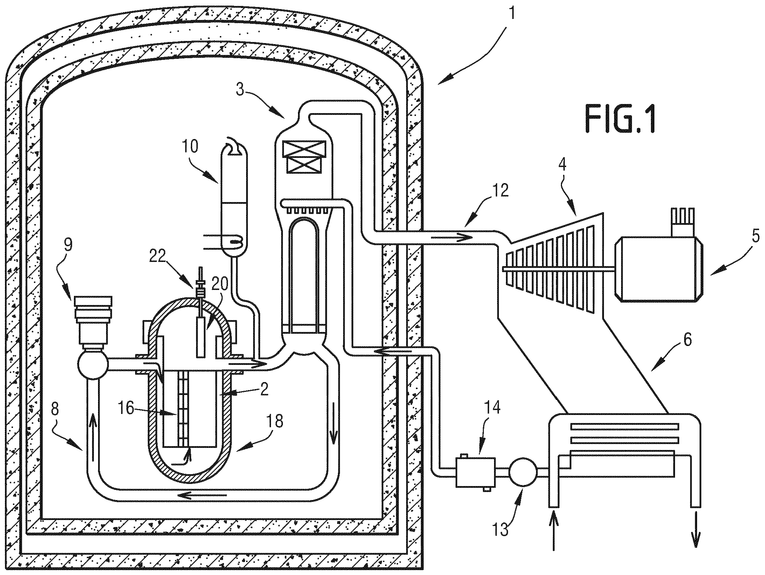

Sur la figure 1, un réacteur nucléaire 1 à eau pressurisée comprend comme connu en soi un cœur 2, un générateur de vapeur 3, une turbine 4 couplée à un générateur 5 d'énergie électrique, et un condenseur 6.

Le réacteur nucléaire 1 comprend un circuit primaire 8 équipé d'une pompe 9 et dans lequel circule de l'eau sous pression, selon le trajet matérialisé par les flèches sur la figure 1. Cette eau remonte notamment au travers du cœur 2 pour y être réchauffée en assurant la réfrigération du cœur 2.

Le circuit primaire 8 comprend en outre un pressuriseur 10 permettant de mettre sous pression l'eau circulant dans le circuit primaire 8.

L'eau du circuit primaire 8 alimente également le générateur de vapeur 3 où elle est refroidie en assurant la vaporisation d'eau circulant dans un circuit secondaire 12.

La vapeur produite par le générateur de vapeur 3 est canalisée par le circuit secondaire 12 vers la turbine 4 puis vers le condenseur 6 où cette vapeur est condensée par échange de chaleur indirect avec de l'eau de refroidissement circulant dans le condenseur 6.

Le circuit secondaire 12 comprend, en aval du condenseur 6, une pompe 13 et un réchauffeur 14.

De manière classique, le cœur 2 comprend des assemblages de combustible 16 qui sont chargés dans une cuve 18 suivant un plan de chargement. Un seul assemblage 16 est représenté sur la figure 1, mais le cœur 2 comprend par exemple 157 assemblages 16.

Le réacteur 1 comprend des grappes de commande 20 qui sont disposées dans la cuve 18 au-dessus de certains assemblages de combustible 16. Une seule grappe de commande 20 est représentée sur la figure 1, mais le cœur 2 comprend par exemple une soixantaine de grappes de commande 20.

Les grappes de commande 20 sont déplaçables par des mécanismes 22 pour venir s'insérer dans les assemblages de combustible 16 qu'elles surplombent.

Classiquement, chaque grappe de commande 20 comprend des crayons dont au moins certains comportent un matériau absorbant les neutrons.

Ainsi, le déplacement vertical de chaque grappe de commande 20 permet de régler la réactivité du réacteur 1 et autorise des variations de la puissance globale P fournie par le cœur 2 depuis la puissance nulle jusqu'à la puissance nominale PN, en fonction de l'enfoncement des grappes de commande 20 dans les assemblages de combustible 16.

Certaines de ces grappes de commande 20 sont destinées à assurer la régulation du fonctionnement du cœur 2, par exemple en puissance ou en température, et sont dénommées grappes de réglage. D'autres sont destinées à l'arrêt du réacteur 1 et sont dénommées grappes d'arrêt.

Les grappes de commande 20 sont réunies en groupes en fonction de leur nature et de leur destination. Par exemple pour les réacteurs de type 900 MWe CPY, ces groupes sont dénommés G1, G2, N1, N2, R, SA, SB, SC, SD. Les groupes G1, G2, N1 et N2, dits groupes de puissance, sont utilisés en recouvrement pour la régulation en puissance et le groupe R est utilisé pour la régulation en température. Les groupes SA, SB, SC et SD sont utilisés pour réaliser l'arrêt d'urgence du réacteur 1.

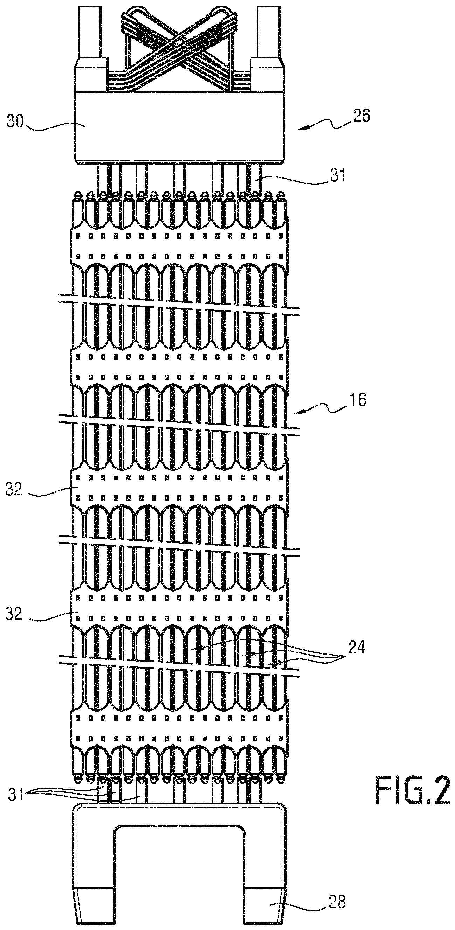

Comme illustré par la figure 2, chaque assemblage de combustible 16 comprend de manière classique un réseau de crayons de combustible 24 et un squelette 26 de support des crayons de combustible 24.

Le squelette 26 comprend classiquement un embout inférieur 28, un embout supérieur 30, un réseau de tubes-guides 31 reliant les deux embouts 28 et 30 et destinés à recevoir les crayons des grappes de commande 20 et à positionner des grilles 32 formant entretoise pour positionner les réseaux de crayons de combustible 24 et de tubes-guides 31.

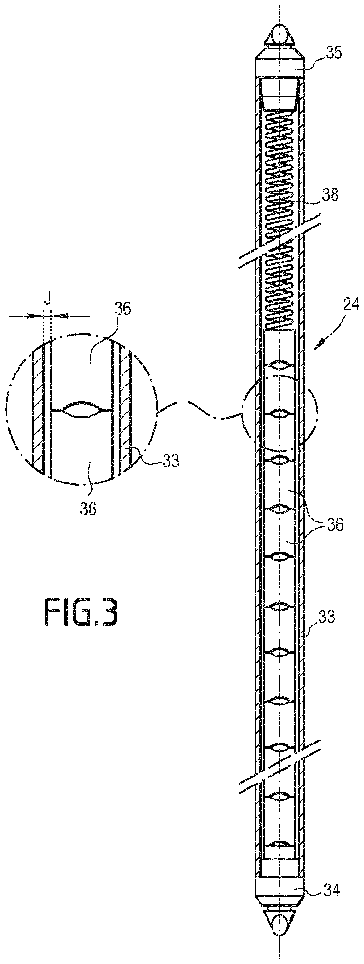

Comme illustré par la figure 3, chaque crayon de combustible 24 comprend de manière classique, une gaine 33 sous forme d'un tube fermé à son extrémité inférieure par un bouchon inférieur 34 et à son extrémité supérieure par un bouchon supérieur 35. Le crayon de combustible 24 comprend une série de pastilles 36 empilées dans la gaine 33 et prenant appui contre le bouchon inférieur 34. Un ressort de maintien 38 est disposé dans le tronçon supérieur de la gaine 33 pour prendre appui sur le bouchon supérieur 35 et sur la pastille 36 supérieure.

Classiquement, les pastilles 36 sont à base de matière fissile, par exemple d'oxyde d'uranium, et la gaine 33 est en alliage de zirconium.

Sur la figure 3, qui correspond à un crayon de combustible 24 issu de fabrication et avant d'irradiation, il existe un jeu radial J entre les pastilles 36 et la gaine 33. Cela est illustré plus particulièrement par la partie cerclée agrandie de la figure 3.

Lorsque le réacteur 1 va fonctionner, par exemple à sa puissance nominale PN, le crayon de combustible 24 va être, selon le terme employé dans la technique, conditionné.

Le conditionnement se caractérise essentiellement par la fermeture du jeu J entre les pastilles 36 et la gaine 33, due au fluage de la gaine 33 et au gonflement des pastilles 36.

Plus spécifiquement, on distingue, par exemple, les étapes suivantes pour chaque crayon de combustible 24 au cours de l'irradiation :
1) Sous l'effet de la différence de pression entre l'extérieur (eau du circuit primaire 8) et l'intérieur du crayon de combustible 24, la gaine 33 se déforme progressivement par fluage radialement vers l'intérieur du crayon de combustible 24. Toutes choses égales par ailleurs, la vitesse de fluage de la gaine 33 est une caractéristique du matériau qui la constitue. Par ailleurs, les produits de fission, qui sont en majorité retenus dans la pastille 36, induisent un gonflement de la pastille 36. Durant cette phase, la sollicitation de la gaine 33 du point de vue des contraintes est uniquement le fait de la pression différentielle existant entre l'extérieur et l'intérieur du crayon de combustible 24. Les contraintes dans la gaine 33 sont des contraintes de compression (négatives par convention).
2) Le contact entre la pastille 36 et la gaine 33 s'amorce au bout d'un laps de temps qui dépend essentiellement des conditions locales d'irradiation (puissance, flux neutronique, température...) et du matériau de la gaine 33. En réalité, le contact s'établit de façon progressive sur une période qui débute par un contact mou suivi par l'établissement d'un contact fort. L'augmentation de la pression de contact de la pastille 36 sur la face interne de la gaine 33 conduit à une inversion des contraintes dans la gaine 33 qui deviennent positives et tendent à solliciter la gaine 33 en traction.
3) Le gonflement de la pastille 36 se poursuit et la pastille 36 impose alors sa déformation à la gaine 33 vers l'extérieur du crayon de combustible 24. En régime permanent établi, cette expansion est suffisamment lente pour que la relaxation du matériau de la gaine 33 permette un équilibre des efforts dans la gaine 33. Une analyse montre que, dans ces conditions, le niveau des contraintes en traction est modéré (quelques dizaines de MPa) et ne présente pas de risque vis-à-vis de l'intégrité de la gaine 33.

S'il n'y a pas de risque de rupture de la gaine 33 en régime permanent du fait de l'équilibre thermomécanique dans la gaine 33 à des niveaux de contraintes assez faibles, un risque apparaît dès que la puissance fournie par le crayon de combustible 24 varie fortement.

En effet, une augmentation de puissance engendre une augmentation de la température dans le crayon de combustible 24. Etant donnée la différence des caractéristiques mécaniques (coefficient de dilatation thermique, module d'Young) et la différence de température entre la pastille 36 en matière fissile et la gaine 33 en alliage de zirconium, la pastille 36 va se dilater davantage que la gaine 33 et imposer sa déformation à cette dernière.

Par ailleurs un fonctionnement à puissance intermédiaire durant plusieurs jours a pour effet de déconditionner les crayons de combustible 24. Pour les portions des crayons de combustible 24 où le contact entre la gaine 33 et les pastilles 36 n'est pas établi, le jeu radial J s'agrandit. En ce qui concerne les portions des crayons de combustible 24 où le jeu J était fermé, le jeu J peut se rouvrir. En cas de jeu J ouvert, le fluage en compression de la gaine 33 par effet de pression reprend. Il en résulte une augmentation des contraintes dans la gaine 33 quand survient le transitoire accidentel.

Par ailleurs, la présence dans l'espace entre la gaine 33 et la pastille 36 de produits de fission corrosifs, tels que l'iode, crée les conditions de la corrosion sous contrainte. Ainsi, la déformation imposée par la pastille 36 à la gaine 33 lors d'un transitoire, ou une variation, de puissance peut provoquer une rupture de la gaine 33.

Or, une telle rupture de la gaine 33 n'est pas admissible pour des raisons de sûreté puisqu'elle pourrait résulter en la libération de produits de fission dans le circuit primaire 8.

Des transitoires de puissance peuvent se produire lors d'un fonctionnement normal du réacteur 1, c'est-à-dire dans les situations dites de catégorie 1. En effet, des variations de puissance peuvent être nécessaires notamment pour s'adapter aux besoins en énergie électrique du réseau électrique que le générateur 5 alimente. Des transitoires de puissance peuvent également se produire dans les situations accidentelles dites de catégorie 2, comme l'augmentation excessive de charge, le retrait incontrôlé de groupe(s) de grappes de commande 20 en puissance, la dilution d'acide borique ou encore la chute de grappes de commande 20 non détectée.

Partant de l'état du bilan des marges obtenu en fonctionnement normal, la durée acceptable de fonctionnement à puissance intermédiaire est déterminée de façon à garantir la non-rupture par interaction pastille-gaine des gaines 33 présentes dans le cœur 2 en cas de transitoire de puissance de catégorie 2, également appelé transitoire de puissance de classe 2.

Pour garantir l'intégrité des crayons de combustible 24 vis-à-vis de l'interaction pastille-gaine, l'invention propose de calculer une marge vis-à-vis du risque de rupture d'une gaine 33 par interaction pastille-gaine (IPG) pour un plan de chargement du réacteur 1, cette marge est appelée marge IPG.

Chaque marge IPG est un écart relatif à une grandeur caractéristique du réacteur nucléaire 1 et de son cœur 2, c'est-à-dire un delta de ladite grandeur caractéristique du réacteur nucléaire 1, cet écart provenant de la prise en compte du risque de rupture des gaines 33 par l'interaction pastille-gaine.

Chaque marge IPG est, par exemple, choisie parmi le groupe consistant en : une marge en puissance, une marge en une grandeur thermomécanique associée à la gaine 33, une marge en une durée de fonctionnement du réacteur 1 à une puissance intermédiaire. La grandeur caractéristique du réacteur nucléaire 1, dont un écart, ou un delta, est déterminé pour calculer la marge IPG est alors la puissance nucléaire, la grandeur thermomécanique associée à la gaine 33, ou encore la durée de fonctionnement du réacteur 1 à puissance intermédiaire.

L'homme du métier comprendra que plus la marge IPG est importante, plus la probabilité de rupture d'une gaine 33 est faible.

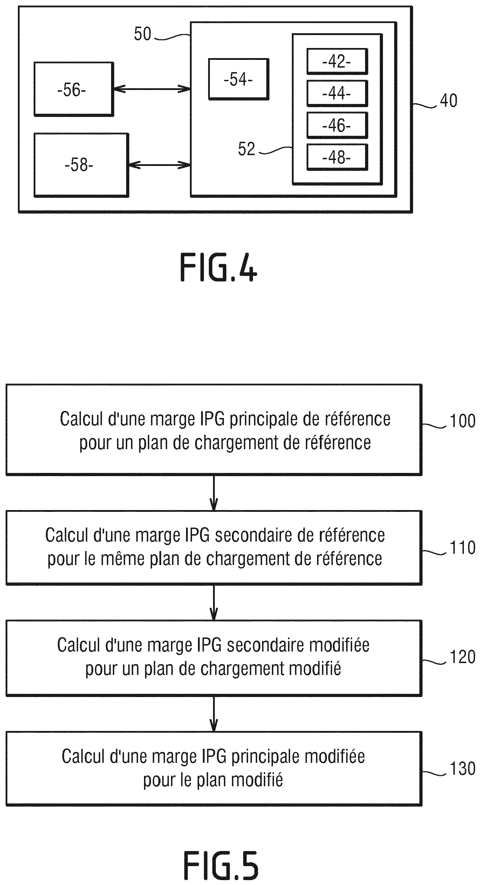

Pour cela, on utilise, par exemple, un système électronique 40, en particulier un système informatique, de calcul d'une marge IPG associée à un plan de chargement du réacteur nucléaire 1, tel que celui représenté à la figure 4.

Le système de calcul 40 comprend un premier module de calcul 42 configuré pour calculer une marge IPG principale de référence pour un plan de référence de chargement des assemblages de combustible 16 dans le cœur 2.

Le système de calcul 40 comprend un deuxième module de calcul 44 configuré pour calculer, d'une part, une marge IPG secondaire de référence pour le plan de référence de chargement des assemblages de combustible, et d'autre part, une marge IPG secondaire modifiée pour un plan modifié de chargement des assemblages de combustible 16 dans le cœur 2, modifié par rapport au plan de référence.

Chaque marge IPG principale et chaque marge IPG secondaire sont chacune une marge IPG du type précité, par exemple une marge en puissance, une marge en la grandeur thermomécanique, une marge en la durée de fonctionnement à puissance intermédiaire. La marge IPG principale et la marge IPG secondaire sont par exemple du même type.

En variante, la marge IPG principale et la marge IPG secondaire sont chacune de type distinct. La marge IPG principale est par exemple une marge en la grandeur thermomécanique ou une marge en la durée de fonctionnement à puissance intermédiaire. La marge IPG secondaire est par exemple une marge en puissance.

L'homme du métier comprendra que la marge IPG secondaire est par définition la marge IPG calculée par le deuxième module de calcul 44, et que le nom de marge IPG secondaire n'est en particulier pas lié au circuit secondaire 12, la marge IPG principale de référence étant par ailleurs calculée par le premier module de calcul 42.

Le système de calcul 40 comprend un module de comparaison 46 configuré pour comparer ladite marge IPG secondaire modifiée avec la marge IPG secondaire de référence, le module de comparaison 46 étant configuré en outre pour calculer une marge IPG principale modifiée pour le plan modifié, en fonction du résultat de ladite comparaison de la marge IPG secondaire modifiée avec la marge IPG secondaire de référence.

Lorsque ladite marge IPG secondaire modifiée est inférieure à la marge IPG secondaire de référence, le module de comparaison 46 est configuré pour calculer une valeur de la marge IPG principale modifiée qui est inférieure à celle de la marge IPG principale de référence.

Dans le cas contraire, lorsque ladite marge IPG secondaire modifiée est supérieure ou égale à la marge IPG secondaire de référence, la marge IPG principale modifiée est égale à la marge IPG principale de référence.

Cette valeur de marge IPG principale modifiée est fournie à l'exploitant du réacteur nucléaire 1 devant mettre en oeuvre le plan de chargement modifié pour adaptation si nécessaire de ses spécifications techniques d'exploitation, notamment les durées autorisées de fonctionnement à puissance intermédiaire.

Les marges IPG modifiées, à savoir la marge IPG principale modifiée et la marge IPG secondaire modifiée, sont également appelées marges IPG de flexibilité, ces marges IPG étant associées au plan modifié, également appelé plan de flexibilité.

En complément facultatif, le système de calcul 40 comprend un module de détermination 48 configuré pour déterminer, à partir de la valeur de la marge IPG principale calculée correspondant au plan de chargement du réacteur 1, une valeur limite de déclenchement d'un arrêt d'urgence et/ou d'une alarme du réacteur nucléaire 1, la valeur limite de déclenchement d'une alarme étant réduite par rapport à ou au plus égale à la valeur limite de déclenchement d'un arrêt d'urgence.

En particulier, lorsque le plan de chargement du réacteur 1 est le plan modifié, également appelé plan de flexibilité, la valeur limite de déclenchement d'un arrêt d'urgence et/ou d'une alarme du réacteur nucléaire 1 est déterminée à partir de la valeur de la marge IPG principale modifiée calculée, et ladite valeur limite de déclenchement pour le plan de flexibilité est alors réduite par rapport à, ou au plus égale, à la valeur limite de déclenchement pour le plan de référence.

Dans l'exemple de la figure 4, le système de calcul 40 comprend une unité de traitement d'informations 50, formée par exemple d'une mémoire 52 et d'un processeur 54 associé à la mémoire 52. Il comprend en outre dans cet exemple des moyens d'entrée/sortie 56 et éventuellement un écran d'affichage 58.

Dans l'exemple de la figure 4, le premier module de calcul 42, le deuxième module de calcul 44, le module de comparaison 46 et en complément facultatif le module de détermination 48 sont réalisés chacun sous forme d'un logiciel exécutable par le processeur 54. La mémoire 52 de l'unité de traitement d'informations 50 est alors apte à stocker un premier logiciel de calcul configuré pour calculer une marge IPG principale de référence pour un plan de référence de chargement, un deuxième logiciel de calcul configuré pour calculer une marge IPG secondaire de référence pour le plan de chargement de référence et une marge IPG secondaire modifiée pour le plan de chargement modifié, un logiciel de comparaison configuré pour comparer la marge IPG secondaire modifiée avec la marge IPG secondaire de référence, et en outre pour calculer la marge IPG principale modifiée en fonction de la comparaison entre la marge IPG secondaire modifiée et la marge IPG secondaire de référence. La mémoire 52 est en complément facultatif apte à stocker un logiciel de détermination configuré pour déterminer une valeur limite de déclenchement d'un arrêt d'urgence et/ou d'une alarme du réacteur nucléaire 1 à partir de la marge IPG principale calculée correspondant au plan de chargement, de référence ou modifié, selon lequel le réacteur 1 est chargé. Le processeur 54 de l'unité de traitement d'informations 50 est alors apte à exécuter le premier logiciel de calcul, le deuxième logiciel de calcul, le logiciel de comparaison et en complément facultatif le logiciel de détermination.

En variante non représentée, le premier module de calcul 42, le deuxième module de calcul 44, le module de comparaison 46 et en complément facultatif le module de détermination 48 sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Specific Integrated Circuit*)*.*

Le premier module de calcul 42 est configuré pour calculer la marge IPG principale de référence pour le plan de référence de chargement, par exemple suivant une première méthodologie, par exemple la méthodologie appelée MIR pour Méthodologie IPG Rénovée.

Le premier module de calcul 42 est, selon cet exemple, configuré pour simuler au moins un transitoire de fonctionnement du réacteur 1, pour calculer la valeur atteinte par une grandeur physique G au cours du transitoire de fonctionnement dans au moins une portion d'une gaine 33 d'un crayon de combustible 24, et pour déterminer, en tant que marge IPG principale de référence l'écart entre la valeur maximale atteinte par ladite valeur calculée au cours du transitoire et une limite technologique du crayon de combustible 24. Dans cette méthodologie, les calculs neutroniques (simulation du transitoire de puissance) et thermomécaniques (calcul d'une grandeur physique dans la gaine) sont couplés

La grandeur physique G est par exemple la contrainte circonférentielle σ_{θ} ou la contrainte radiale σᵣ dans la gaine 33. En variante, la grandeur physique G est une fonction de contrainte(s), par exemple de la différence entre par exemple la contrainte circonférentielle σ_{θ} et la contrainte radiale σᵣ. En variante encore, la grandeur physique G est la densité d'énergie de déformation DED dans la gaine 33.

Le transitoire simulé par le premier module de calcul 42 est de préférence un transitoire choisi parmi le groupe consistant en :
- une augmentation excessive de charge,
- un retrait incontrôlé d'au moins un groupe de grappes de commande 20,
- une chute de l'une des grappes de commande 20, et
- une dilution incontrôlée d'acide borique.

L'augmentation excessive de charge correspond à une augmentation rapide du débit de vapeur dans le générateur de vapeur 3. Une telle augmentation entraîne un déséquilibre entre la puissance thermique du cœur 2 et la charge du générateur de vapeur 3. Ce déséquilibre conduit à un refroidissement du circuit primaire 8. Du fait de l'effet modérateur et/ou de la régulation de la température moyenne dans le cœur 2 par les grappes de commande 20, la réactivité, et donc le flux neutronique, augmentent dans le cœur 2. Ainsi, la puissance globale P fournie par le cœur 2 augmente rapidement.

Le retrait incontrôlé de groupes de grappes de commande 20 alors que le réacteur fonctionne provoque une augmentation incontrôlée de la réactivité. Il en résulte une augmentation rapide de la puissance nucléaire globale P et du flux de chaleur dans le cœur 2. Jusqu'à l'ouverture d'une vanne de décharge ou d'une soupape de sûreté du circuit secondaire 12, l'extraction de chaleur dans le générateur de vapeur 3 augmente moins vite que la puissance dégagée dans le circuit primaire 8. Il en résulte un accroissement de la température et de la pression de l'eau du circuit primaire 8. Pour simuler ce transitoire, on suppose un retrait des groupes de puissance à la vitesse maximale de 72 pas/mn jusqu'à l'extraction totale des grappes de commande 20 concernées.

Si une ou plusieurs des grappes de commande 20 chute(nt) dans le cœur, il en résulte une réduction immédiate de la réactivité et de la puissance globale P dans le cœur 2. En l'absence d'action protectrice, le déséquilibre ainsi induit entre le circuit primaire 8 et le circuit secondaire 12 entraîne une diminution de la température d'entrée de l'eau dans le cœur 2, ainsi qu'une augmentation de la puissance neutronique par les contre-réactions, par exemple par effet Doppler, et la régulation de température, jusqu'à l'atteinte d'un nouvel équilibre entre le circuit primaire 8 et le circuit secondaire 12. La présence dans le cœur 2 du réacteur nucléaire 1 de la ou des grappes de commande 20 ayant chuté provoque une déformation de la distribution radiale de puissance, tandis que le retrait du groupe de régulation conduit à une modification axiale de la puissance.

La dilution incontrôlée d'acide borique consiste en une diminution de la concentration en bore de l'eau du circuit primaire du réacteur due à une défaillance d'un système du réacteur 1. Elle provoque une insertion de réactivité qui conduit à un accroissement local de la puissance linéique dans le cœur 2.

La limite technologique d'un crayon de combustible 24 est établie à partir des valeurs atteintes par la grandeur physique dans des gaines lors de rampes de puissance expérimentales, réalisées en réacteur d'essais, sur des tronçons de crayons de combustible représentatifs des crayons de combustible 24 et préalablement irradiés en réacteur nucléaire de puissance et présentant différents taux de combustion. La limite technologique de la grandeur physique correspond à la valeur minimale de la grandeur physique parmi les valeurs atteintes au cours des essais expérimentaux. En deçà de cette limite, aucune rupture de crayon de combustible 24 par interaction pastille-gaine n'est envisagée. Au-delà, la probabilité d'une rupture de gaine par interaction pastille-gaine n'est pas nulle.

Le deuxième module de calcul 44 est configuré pour calculer chaque marge IPG secondaire, par exemple suivant une deuxième méthodologie distincte de la première méthodologie, par exemple la méthodologie appelée méthodologie de puissance à rupture.

Le deuxième module de calcul 44 est, selon cet exemple, pour chaque assemblage de combustible 16, configuré pour simuler une évolution du fonctionnement du réacteur nucléaire 1 en appliquant à chaque crayon de combustible 24 une rampe de puissance nucléaire depuis la puissance nulle, afin de calculer les valeurs atteintes par une grandeur physique localement dans chaque gaine 33 de chaque crayon de combustible 24 présent dans le cœur 2 et pour déterminer le cas échéant une puissance à rupture locale égale à la puissance associée à la valeur locale de la grandeur physique lorsque cette valeur atteint la limite technologique. En cas de non-atteinte de la limite technologique, la puissance à rupture locale au point considéré est infinie. Dans cette méthodologie, la rampe de puissance simulée est une rampe théorique, indépendante des études neutroniques, et les calculs thermomécaniques sont alors découplés des calculs neutroniques

Le deuxième module de calcul 44 est, configuré en outre pour évaluer en chaque point du cœur 2 une marge en puissance par différence entre la puissance à rupture calculée pour un plan de chargement et une puissance maximale locale estimée au même instant du cycle d'irradiation pour le plan de chargement considéré, la marge IPG secondaire calculée suivant la deuxième méthodologie dépendant alors de la marge minimale parmi les marges en puissance ainsi évaluées. La marge IPG secondaire calculée est, par exemple, égale à la marge minimale parmi lesdites marges en puissance évaluées.

La puissance maximale estimée est, par exemple, une enveloppe de puissance en tout point du cœur 2 et tenant compte de tous les transitoires limitants. Cette puissance maximale estimée tient notamment compte des transitoires de puissance susceptibles de se produire dans les situations accidentelles dites de catégorie 2.

L'homme du métier comprendra alors que, dans l'exemple décrit ci-dessus, le premier module de calcul 42 est plus généralement configuré pour calculer une marge IPG principale suivant la première méthodologie, dite méthodologie IPG rénovée, et que le deuxième module de calcul 44 est plus généralement configuré pour calculer une marge IPG secondaire, de référence ou modifiée, suivant la deuxième méthodologie, dite méthodologie de puissance à rupture.

Le module de comparaison 46 est alors configuré pour comparer ladite marge IPG secondaire modifiée avec ladite marge IPG secondaire de référence, et en déduire la marge IPG principale modifiée.

Lorsque la marge IPG secondaire modifiée est supérieure ou égale à la marge IPG secondaire de référence, le module de comparaison 46 est alors configuré pour valider en tant que marge IPG principale modifiée, associée au plan de chargement modifié, la valeur de la marge IPG principale de référence.

Lorsque la marge IPG secondaire modifiée est inférieure à la marge IPG secondaire de référence, le module de comparaison 46 est configuré pour calculer une valeur de la marge IPG principale modifiée qui est inférieure à celle de la marge IPG principale de référence. La marge IPG principale modifiée est, par exemple, calculée en appliquant un facteur correctif à la marge IPG principale de référence. Le facteur correctif est, par exemple, une valeur positive soustraite à la marge IPG principale de référence, ou encore un facteur multiplicatif strictement compris entre 0 et 1.

Le facteur correctif est de préférence fonction de l'écart entre la marge IPG secondaire modifiée et la marge IPG secondaire de référence. Le facteur correctif est, par exemple, fonction d'un ratio entre la marge IPG secondaire modifiée et la marge IPG secondaire de référence. La marge IPG principale modifiée est alors, par exemple, calculée en multipliant la marge IPG principale de référence par le ratio entre la marge IPG secondaire modifiée et la marge IPG secondaire de référence.

La marge IPG principale modifiée est transmise à l'exploitant devant mettre en oeuvre ledit plan de chargement modifié afin d'adapter si besoin, les seuils de protection de son réacteur 1 étant inchangés, la durée de fonctionnement à puissance intermédiaire au cours du cycle d'irradiation et donc d'exploiter au mieux les capacités du réacteur 1 en réduisant les risques d'endommagement des crayons de combustible 24.

En complément facultatif, le module de détermination 48 est configuré pour déterminer la valeur limite de déclenchement d'un arrêt d'urgence et/ou d'une alarme à partir de la marge IPG principale calculée et suivant le plan de chargement considéré, la marge IPG principale de référence étant utilisée lorsque le plan de chargement est le plan de chargement de référence, et la marge IPG principale modifiée étant utilisée lorsque le plan de chargement est le plan de chargement modifié. Autrement dit, le module de détermination 48 est configuré pour établir des seuils d'arrêt d'urgence et/ou d'alarme en fonction de la marge IPG principale calculée, et plus généralement pour utiliser la marge IPG principale calculée afin de piloter le réacteur 1.

Le procédé de calcul d'une marge IPG associée à un plan de chargement est illustré par l'organigramme de la figure 5.

Lors d'une première étape 100, une marge IPG principale de référence est calculée par le premier module de calcul 42 pour le plan de chargement de référence des assemblages de combustible 16 dans le cœur 2.

La marge IPG principale de référence est de préférence calculée en utilisant la méthodologie MIR, telle que décrite précédemment. L'homme du métier observera que le document FR 2 846 139 A1, en particulier en pages 9 à 19, en regard des figures 5 à 11, concerne également la méthodologie MIR.

L'interaction pastille-gaine étant par nature locale, le risque de rupture de gaine est déterminé à partir de l'état thermomécanique des crayons de combustible 24 en chaque maille du cœur 2 du réacteur nucléaire 1. L'état thermomécanique d'un crayon de combustible 24 à un instant donné dépend des historiques de puissance subis par ledit crayon de combustible 24 depuis sa première introduction à l'état neuf dans le cœur 2 jusqu'à l'instant du calcul.

Pour le calcul de la marge IPG principale de référence, le premier module de calcul 42 commence, par exemple, par déterminer une valeur d'une grandeur physique G pour chaque maille axiale de chaque crayon de combustible 24 présent dans le cœur 2 du réacteur 1.

Les historiques de puissance sont engendrés par le premier module de calcul 42 pour chaque crayon de combustible 24 présent dans le cœur 2, par exemple par modélisation par éléments finis du comportement neutronique des crayons de combustible 24.

Les historiques de fonctionnement relatifs à chaque crayon de combustible 24 sont générés pour différents modes de fonctionnement du cœur 2, à savoir :
- le fonctionnement en base où la puissance globale P du cœur 2 est égale à sa puissance nominale PN,
- le fonctionnement à puissance intermédiaire avec les grappes de commande 20 insérées dans les assemblages de combustible 16,
- le fonctionnement à puissance intermédiaire avec les grappes de commande 20 extraites des assemblages de combustible 16.

Les historiques peuvent être générés en prenant en compte différents niveaux de puissance intermédiaire, par exemple 10% PN, 30% PN, 50% PN...

Le premier module de calcul 42 simule ensuite au moins un transitoire de fonctionnement du réacteur nucléaire 1, tels qu'un ou plusieurs transitoires accidentels de fonctionnement du réacteur 1 qui induisent des variations brusques de puissance. Les transitoires accidentels sont simulés par exemple à partir de conditions initiales simulées correspondant à une situation dite de catégorie 1, à plusieurs instants dans chaque cycle.

Les transitoires simulés sont les transitoires accidentels dits de catégorie 2 induisant les variations de puissance les plus fortes et les plus rapides dans le cœur 2, tels que les transitoires décrits précédemment, à savoir l'augmentation excessive de charge, le retrait incontrôlé de groupes de grappes de commande 20, alors que le réacteur 1 est en puissance, et la chute de grappe(s) 20.

Le premier module de calcul 42 calcule alors la valeur maximale atteinte par la grandeur physique G, telle que la contrainte circonférentielle σ_{θ}, au cours du transitoire de fonctionnement dans chaque maille axiale de chaque crayon de combustible 24, puis compare pour chaque maille axiale ladite valeur maximale avec la limite technologique et détermine la marge IPG comme étant la différence entre la limite technologique et la valeur maximale de la grandeur physique sur le cœur 2.

Lors d'une deuxième étape 110, la marge IPG secondaire de référence est calculée par le deuxième module de calcul 44 pour le plan de référence de chargement des assemblages de combustible 16 dans le cœur 2.

La marge IPG secondaire de référence est de préférence calculée en utilisant la deuxième méthodologie, dite méthodologie de puissance à rupture.

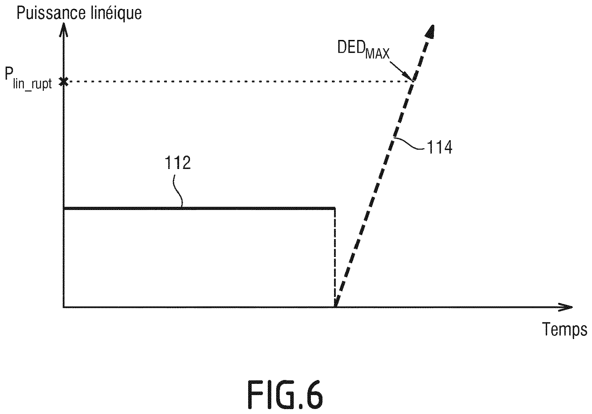

Le deuxième module de calcul 44 simule alors, pour chaque assemblage de combustible 16, une évolution du fonctionnement du réacteur nucléaire 1 en appliquant à chaque maille axiale de chaque crayon de combustible 24, après un palier 112 à puissance sensiblement constante, une rampe de puissance 114 depuis la puissance nulle, comme représenté sur la figure 6. Le deuxième module de calcul 44 calcule alors les valeurs atteintes localement dans chaque maille axiale de chaque crayon de combustible 24, par une grandeur physique et, en cas de dépassement de la limite technologique détermine une puissance à rupture P_{lin_rupt} égale à la puissance associée à la grandeur physique à rupture. Dans l'exemple de la figure 6, la rampe de puissance 114 est une rampe de puissance linéique, et la grandeur physique est la densité d'énergie de déformation DED dans la gaine 33, la puissance à rupture P_{lin_rupt} correspondant alors à la densité d'énergie de déformation maximale DED_{MAX}, c'est-à-dire à la valeur de la densité d'énergie de déformation atteinte lors de la rupture de la gaine 33.

Le deuxième module de calcul 44 évalue ensuite, pour chaque maille axiale de chaque crayon de combustible 24, une marge en puissance par différence entre la puissance à rupture et la puissance maximale sur l'ensemble des transitoires, la marge IPG secondaire calculée suivant la deuxième méthodologie dépendant alors de la marge minimale parmi les marges en puissance évaluées pour chaque maille axiale de chaque crayons de combustible 24 de chaque assemblage de combustible 16.

Lors de l'étape suivante 120, le deuxième module de calcul 44 calcule la marge IPG secondaire modifiée pour le plan modifié de chargement des assemblages de combustible 16 dans le cœur 2.

Le plan de chargement modifié est par exemple distinct du plan de chargement de référence de par au moins un assemblage de combustible chargé dans le cœur.

En variante, les assemblages de combustible 16 chargés dans le cœur sont identiques entre le plan modifié de chargement et le plan de référence de chargement, le plan modifié étant alors distinct du plan de référence de par la position d'au moins deux assemblages de combustible dans le cœur 2.

La marge IPG secondaire modifiée est de préférence calculée en utilisant la deuxième méthodologie, dite méthodologie de puissance à rupture, c'est-à-dire comme indiqué précédemment pour l'étape 110, mais avec le plan modifié de chargement.

Lors de l'étape suivante 130, le module de comparaison 46 compare alors ladite marge IPG secondaire modifiée avec ladite marge IPG secondaire de référence, et valide, en tant que marge IPG principale modifiée, la marge IPG principale de référence préalablement calculée, lorsque ladite marge IPG secondaire modifiée est supérieure ou égale à ladite marge IPG secondaire de référence.

Lorsque ladite marge IPG secondaire modifiée est inférieure à ladite marge IPG secondaire de référence, le module de comparaison 46 calcule la marge IPG principale modifiée, celle-ci ayant alors une valeur inférieure à celle de la marge IPG principale de référence préalablement calculée, par exemple en appliquant un facteur correctif à ladite marge IPG principale de référence. Le facteur correctif est, par exemple, une valeur positive soustraite à la marge IPG principale de référence, ou encore un facteur multiplicatif strictement compris entre 0 et 1.

Le facteur correctif est de préférence fonction de l'écart entre la marge IPG secondaire modifiée et la marge IPG secondaire de référence. Le facteur correctif est, par exemple, fonction d'un ratio entre la marge IPG secondaire modifiée et la marge IPG secondaire de référence. La marge IPG principale modifiée est alors, par exemple, obtenue en multipliant la marge IPG principale de référence par le ratio entre la marge IPG secondaire modifiée et la marge IPG secondaire de référence.

Cette valeur de marge IPG principale, en particulier la marge IPG principale modifiée lorsque le réacteur 1 est chargé selon le plan modifié, est fournie à l'exploitant du réacteur nucléaire 1 devant mettre en œuvre le plan de chargement modifié pour adaptation si nécessaire de ses spécifications techniques d'exploitation.

En complément facultatif, à partir de cette valeur de la marge IPG principale modifiée, associée au plan de chargement modifié, le module de détermination 48 établit alors des seuils d'arrêt d'urgence et/ou d'alarme, et plus généralement utilise la marge IPG principale modifiée pour réduire le cas échéant les seuils d'arrêt d'urgence et/ou d'alarme pour piloter le réacteur 1.

Ainsi, le procédé de calcul et le système de calcul 40 selon l'invention permettent de calculer une marge IPG, en prenant en compte une variabilité des plans de chargement, en considérant par exemple un chargement de transition vers ou depuis le chargement nominal, tel qu'un chargement correspondant au démarrage d'un premier cœur, à une montée à l'équilibre, à un changement de gestion du fonctionnement du réacteur, ou encore à un cycle de fin de vie de réacteur.

Le procédé de calcul et le système de calcul 40 selon l'invention permettent aussi de fixer le cas échéant les réglages de certains seuils d'arrêt ou d'alarme du réacteur nucléaire 1 à des valeurs inférieures si nécessaire et de convertir l'écart correspondant à la marge IPG en durée autorisée de fonctionnement à puissance intermédiaire. Ainsi, il est possible d'assurer un fonctionnement sûr du réacteur nucléaire 1, tout en exploitant mieux ses capacités, notamment en cas de fonctionnement prolongé à puissance intermédiaire (FPPI).

Le procédé de calcul et le système de calcul 40 selon l'invention permettent ainsi une meilleure adéquation entre la gestion du combustible et la manœuvrabilité du réacteur 1 pour l'exploitant : choix du plan de chargement, justification des cycles de transition, possibilité d'allonger les durées de FPPI.

## Revendications

1. Procédé de calcul d'une marge interaction pastille-gaine, IPG associée à un plan de chargement d'un réacteur nucléaire (1) comprenant un cœur (2) dans lequel des assemblages de combustible (16) sont chargés suivant le plan de chargement, les assemblages de combustible (16) comprenant des crayons de combustible (24) comportant chacun des pastilles (36) de combustible nucléaire et une gaine (33) entourant les pastilles (36),
le procédé étant mis en œuvre par un système électronique (40) et comprenant les étapes de :
- b) calculer (100) une marge IPG principale de référence pour un plan de référence de chargement des assemblages de combustible (16) dans le cœur (2),
- c) calculer (110) une marge IPG secondaire de référence pour le plan de référence,
- d) calculer (120) une marge IPG secondaire modifiée pour un plan modifié de chargement des assemblages de combustible (16) dans le cœur (2),
- e) calculer (130) une marge IPG principale modifiée pour le plan modifié, en fonction d'une comparaison de la marge IPG secondaire modifiée avec la marge IPG secondaire de référence.

2. Procédé selon la revendication 1, dans lequel, lorsque la marge IPG secondaire modifiée est supérieure ou égale à la marge IPG secondaire de référence, la marge IPG principale modifiée est égale à la marge IPG principale de référence, et
lorsque la marge IPG secondaire modifiée est inférieure à la marge IPG secondaire de référence, la marge IPG principale modifiée est inférieure à la marge IPG principale de référence.

3. Procédé selon la revendication 2, dans lequel, lorsque la marge IPG secondaire modifiée est inférieure à la marge IPG secondaire de référence, la marge IPG principale modifiée est égale à la marge IPG principale de référence réduite par un facteur correctif fonction de l'écart entre la marge IPG secondaire modifiée et la marge IPG secondaire de référence.

4. Procédé selon la revendication 3, dans lequel le facteur correctif est fonction d'un ratio entre la marge IPG secondaire modifiée et la marge IPG secondaire de référence et est strictement compris entre 0 et 1.

5. Procédé selon l'une quelconque des revendications précédentes, dans lequel l'étape b) comprend les sous-étapes de :
b1) simuler au moins un transitoire de fonctionnement du réacteur nucléaire (1),
b2) calculer la valeur atteinte par une grandeur physique (G) au cours du transitoire de fonctionnement dans au moins une partie d'une gaine (33) d'un crayon de combustible (24), et
b3) déterminer, en tant que marge IPG principale de référence, l'écart entre la valeur maximale atteinte par ladite valeur calculée à la sous-étape b2) au cours du transitoire et une limite technologique du crayon de combustible (24).

6. Procédé selon la revendication 5, dans lequel le transitoire simulé à la sous-étape b1) est un transitoire choisi parmi le groupe consistant en :
- une augmentation excessive de charge,
- un retrait incontrôlé d'au moins un groupe de grappes de commande (20),
- une chute de l'une des grappes de commande (20), et
- une dilution incontrôlée d'acide borique.

7. Procédé selon la revendication 5 ou 6, dans lequel le procédé comprend, avant l'étape b), l'étape de :
a) déterminer une valeur de rupture (G_{RUP}, DEDᵣᵤₚ) de la grandeur physique (G, DED) caractérisant une rupture de la gaine (33).

8. Procédé selon la revendication 7, dans lequel l'étape a) comporte :
- soumettre des crayons de combustible (24) préalablement irradiés à des rampes de puissance nucléaire expérimentales,
- calculer les valeurs atteintes (G_{MAX}, DED_{MAX}) par la grandeur physique (G, DED) dans au moins une gaine (33) rompue lors d'une rampe de puissance, et
- sélectionner la valeur de rupture (G_{RUP}, DED_{RUP}) comme étant la valeur minimale parmi les valeurs atteintes calculées.

9. Procédé selon la revendication 7 ou 8, dans lequel chacune des étapes c) et d) comporte, pour chaque assemblage de combustible (16), les sous-étapes de :
i) simuler une évolution du fonctionnement du réacteur nucléaire (1) en appliquant à des crayons de combustible (24) une rampe de puissance nucléaire depuis la puissance nulle,
ii) calculer les valeurs atteintes (DED_{MAX}) par une grandeur physique (DED) dans les gaines (33) des crayons de combustible (24),
iii) comparer les valeurs atteintes (DED_{MAX}) à la valeur de rupture (DED_{RUP})
iv) déterminer une puissance à rupture égale :
I) à la puissance associée à la valeur rupture (DED_{RUP}), si une valeur minimale parmi les valeurs atteintes (DED_{MAX}) calculées à la sous-étape ii) est supérieure à la valeur de rupture (DED_{RUP}), ou
II) à l'infini, si aucune valeur, parmi les valeurs atteintes (DED_{MAX}) calculées à la sous-étape ii), n'est supérieure à la valeur de rupture (DED_{RUP}),
v) évaluer une marge en puissance par différence entre la puissance à rupture déterminée à la sous-étape iv) et une puissance maximale estimée en l'assemblage de combustible (16),
la marge IPG secondaire correspondante, calculée lors de chacune des étapes c) et d), est égale à la marge minimale parmi les marges en puissance évaluées pour les assemblages de combustible (16) à la sous-étape v).

10. Procédé selon l'une quelconque des revendications précédentes, dans lequel des calculs neutroniques et des calculs thermomécaniques sont effectués pour calculer chaque marge IPG, et
dans lequel les calculs neutroniques et les calculs thermomécaniques sont couplés pour le calcul d'une marge IPG principale correspondante, les calculs thermomécaniques étant découplés des calculs neutroniques pour le calcul d'une marge IPG secondaire correspondante.

11. Procédé selon l'une quelconque des revendications précédentes, dans lequel le procédé comprend en outre l'étape de :
f) déterminer une valeur limite de déclenchement d'un arrêt d'urgence et/ou d'une alarme à partir de la marge IPG principale calculée et pour le plan considéré de chargement des assemblages de combustible (16) dans le cœur (2).

12. Procédé selon l'une quelconque des revendications précédentes, dans lequel la grandeur physique est choisie parmi le groupe consistant en :
- une contrainte ou une fonction de contrainte(s) dans la gaine (33) ; et
- une densité d'énergie de déformation dans la gaine (33).

13. Procédé selon l'une quelconque des revendications précédentes, dans lequel le procédé comprend en outre :
faire fonctionner le réacteur nucléaire (1) en utilisant la marge IPG principale calculée pour le plan considéré de chargement des assemblages de combustible (16) dans le cœur (2).

14. Programme d'ordinateur comportant des instructions logicielles qui, lorsqu'elles sont exécutées par un ordinateur, mettent en œuvre un procédé selon l'une quelconque des revendications précédentes.

15. Système électronique (40) de calcul d'une marge IPG associée à un plan de chargement d'un réacteur nucléaire (1) comprenant un cœur (2) dans lequel des assemblages de combustible (16) sont chargés suivant le plan de chargement, les assemblages de combustible (16) comprenant des crayons de combustible (24) comportant chacun des pastilles (36) de combustible nucléaire et une gaine (33) entourant les pastilles (36),
le système (40) comprenant :
- un premier module de calcul (42) configuré pour calculer une marge IPG principale de référence pour un plan de référence de chargement des assemblages de combustible (16) dans le cœur (2),
- un deuxième module de calcul (44) configuré pour calculer, d'une part, une marge IPG secondaire de référence pour le plan de référence, et d'autre part, une marge IPG secondaire modifiée pour un plan modifié de chargement des assemblages de combustible (16) dans le cœur (2),
- un module de comparaison (46) configuré pour comparer la marge IPG secondaire modifiée avec la marge IPG secondaire de référence,
le module de comparaison (46) étant configuré en outre pour calculer une marge IPG principale modifiée pour le plan modifié, en fonction de ladite comparaison de la marge IPG secondaire modifiée avec la marge IPG secondaire de référence.

## Patentansprüche

1. Verfahren zum Berechnen einer Spanne einer Tablette-Hülle-Zusammenwirkung, IPG, welche im Zusammenhang mit einem Beladungsplan eines Nuklearreaktors (1) steht, der einen Reaktorkern (2) aufweist, in welchen die Brennstoffanordnungen (16) gemäß dem Beladungsplan geladen werden, wobei die Brennstoffanordnungen (16) Brennstäbe (24) aufweisen, welche jeweils Tabletten (36) von Kernbrennstoff und eine Hülle (33), welche die Tabletten (36) umgibt, aufweisen,
wobei das Verfahren durch ein elektronisches System (40) durchgeführt wird und aufweist die Schritte des:
- b) Berechnens (100) einer Referenz-Haupt-IPG-Spanne für einen Referenz-Plan zum Laden der Brennstoffanordnungen (16) in den Reaktorkern (2),
c) Berechnens (110) einer sekundären Referenz-IPG-Spanne für den Referenz-Plan,
d) Berechnens (120) einer modifizierten sekundären IPG-Spanne für einen modifizierten Plan zum Laden der Brennstoffanordnungen (16) in den Reaktorkern (2),
e) Berechnens (130) einer modifizierten Haupt-IPG-Spanne für den modifizierten Plan in Abhängigkeit von einem Vergleich der modifizierten sekundären IPG-Spanne mit der sekundären Referenz-IPG-Spanne.

2. Verfahren gemäß dem Anspruch 1, wobei, wenn die modifizierte sekundäre IPG-Spanne größer oder gleich der sekundären Referenz-IPG-Spanne ist, dann die modifizierte Haupt-IPG-Spanne gleich der Referenz-Haupt-IPG-Spanne ist, und
wenn die modifizierte sekundäre IPG-Spanne kleiner als die sekundäre Referenz-IPG-Spanne ist, dann die modifizierte Haupt-IPG-Spanne kleiner der Referenz-Haupt-IPG-Spanne ist.

3. Verfahren gemäß dem Anspruch 2, wobei, wenn die modifizierte sekundäre IPG-Spanne kleiner als die sekundäre Referenz-IPG-Spanne ist, dann die modifizierte Haupt-IPG-Spanne gleich der Referenz-Haupt-IPG-Spanne ist, welche um einen Korrekturfaktor abhängig von dem Abstand zwischen der modifizierten sekundären IPG-Spanne und der sekundären Referenz-IPG-Spanne verringert ist.

4. Verfahren gemäß dem Anspruch 3, wobei der Korrekturfaktor abhängig von einem Verhältnis zwischen der modifizierten sekundären IPG-Spanne und der sekundären Referenz-IPG-Spanne ist und strikt zwischen 0 und 1 liegt.

5. Verfahren gemäß irgendeinem der vorhergehenden Ansprüche, wobei der Schritt b) aufweist die Unterschritte des:
b1) Simulierens von mindestens einer Betriebstransiente des Nuklearreaktors (1),
b2) Berechnens des Werts, welcher durch eine physikalische Größe (G) im Laufe der Betriebstransiente in mindestens einem Teil der Hülle (33) eines Brennstabs (24) erreicht wird, und
b3) Ermittelns, als Referenz-Haupt-IPG-Spanne, des Abstands zwischen dem maximalen Wert, welcher durch den im Unterschritt b2) berechneten Wert während der Transiente erreicht wird, und einer technischen Grenze des Brennstabs (24).

6. Verfahren gemäß dem Anspruch 5, wobei die im Unterschritt b1) simulierte Transiente aus der Gruppe ausgewählt ist, welche besteht aus:
- einer übermäßigen Ladungserhöhung
- einem unkontrollierten Zurückziehen von mindestens einer Gruppe von Regelstabbündeln (20),
- einem Absinken von einem der Regelstabbündel (20), und
- einer unkontrollierten Verdünnung von Borsäure.

7. Verfahren gemäß dem Anspruch 5 oder 6, wobei das Verfahren vor dem Schritt b) aufweist den Schritte des:
a) Ermittelns eines Bruchwerts (G_{RUP}, DEDᵣᵤₚ) der physikalischen Größe (G, DED), welcher einen Bruch der Hülle (33) charakterisiert.

8. Verfahren gemäß dem Anspruch 7, wobei der Schritt a) aufweist:
- Unterziehen der zuvor verstrahlten Brennstäbe (24) experimentellen Nukleare-Leistung-Rampen,
- Berechnen von Werten (G_{MAX}, DED_{MAX}), welche durch die physikalische Größe (G, DED) in mindestens einer während der Leistungsrampe zerbrochenen Hülle (33) erreicht werden,
- Wählen des Bruchwerts (G_{RUP}, DEDᵣᵤₚ) als der minimale Wert unter den berechneten erreichten Werten.

9. Verfahren gemäß dem Anspruch 7 oder 8, wobei jeder der Schritte c) und d) für jede Brennstoffanordnung (16) aufweist die Unterschritte des:
i) Simulierens einer Entwicklung des Betriebs des Nuklearreaktors (1) unter Anwenden einer Rampe der nuklearen Leistung ausgehend von der Nullleistung auf die Brennstäbe (24),
ii) Berechnens der durch eine physikalische Größe (G, DED) in den Hüllen (33) der Brennstäbe (24) erreichten Werte (DED_{MAX}),
iii) Vergleichens der erreichten Werte (DED_{MAX}) mit dem Bruchwert (DED_{RUP}),
iv) Ermittelns einer Bruchleistung gleich:
I) der Leistung, die mit dem Bruchwert (DED_{RUP}) zusammenhängt, falls ein minimaler Wert von den erreichten Werten (DED_{MAX}), welche im Unterschritt ii) berechnet wurden, größer als der Bruchwert (DED_{RUP}) ist, oder
II) unendlich, falls kein Wert von den erreichten Werten (DED_{MAX}), welche im Unterschritt ii) berechnet wurden, größer als der Bruchwert (DED_{RUP}) ist,
v) Evaluierens einer Leistungsspanne durch Differenz zwischen der im Unterschritt iv) ermittelten Leistung bei Bruch und einer geschätzten Maximalleistung in der Brennstoffanordnung (16),
wobei die korrespondierende sekundäre IPG-Spanne, welche bei jedem der Schritte c) und d) berechnet wird, gleich der minimalen Spanne unter den Leistungsspannen, welche für die Brennstoffanordnungen (16) in dem Unterschritt v) evaluiert wurden, ist.

10. Verfahren gemäß irgendeinem der vorhergehenden Ansprüche, wobei die neutronenphysikalischen Berechnungen und die thermomechanischen Berechnungen durch Berechnen jeder IPG-Spanne realisiert werden, und
wobei die neutronenphysikalischen Berechnungen und die thermomechanischen Berechnungen für die Berechnung einer korrespondierenden Haupt-IPG-Spanne gekoppelt sind, wobei die thermomechanischen Berechnungen von den neutronenphysikalischen Berechnungen für die Berechnung einer korrespondierenden sekundären IPG-Spanne entkoppelt sind.

11. Verfahren gemäß irgendeinem der vorhergehenden Ansprüche, wobei das Verfahren ferner aufweist den Schritt des:
f) Ermittelns eines Grenzwerts zum Auslösen einer Notabschaltung und/oder eines Alarms aus der berechneten Haupt-IPG-Spanne und für den betrachteten Plan zum Laden der Brennstoffanordnungen (16) in den Reaktorkern (2).

12. Verfahren gemäß irgendeinem der vorhergehenden Ansprüche, wobei die die physikalische Größe aus der Gruppe ausgewählt ist, welche besteht aus:
- einer Spannung oder eine Funktion von Spannung(en) in der Hülle (33), und
- einer Verformungsenergiedichte in der Hülle (33).

13. Verfahren gemäß irgendeinem der vorhergehenden Ansprüche, wobei das Verfahren ferner aufweist:
Betreiben des Nuklearreaktors (1) unter Verwendung der für den betrachteten Plan zum Laden der Brennstoffanordnungen (16) in den Reaktorkern (2) berechneten Haupt-IPG-Spanne.

14. Computerprogramm, aufweisend logische Befehle, welche bei deren Ausführung durch einen Rechner ein Verfahren gemäß irgendeinem der vorhergehenden Ansprüche umsetzen.

15. Elektronisches System (40) zum Berechnen einer IPG-Spanne, welche im Zusammenhang mit einem Beladungsplan eines Nuklearreaktors (1) steht, der einen Reaktorkern (2) aufweist, in welchen die Brennstoffanordnungen (16) gemäß dem Beladungsplan geladen werden, wobei die Brennstoffanordnungen (16) Brennstäbe (24) aufweisen, welche jeweils Tabletten (36) von Kernbrennstoff und eine Hülle (33), welche die Tabletten (36) umgibt, aufweisen,
wobei das System (40) aufweist:
- ein erstes Berechnungsmodul (42), welches dazu eingerichtet ist, eine Referenz-Haupt-IPG-Spanne für einen Referenz-Plan zum Laden der Brennstoffanordnungen (16) in den Reaktorkern (2) zu berechnen,
- ein zweites Berechnungsmodul (44), welches dazu eingerichtet ist, einerseits eine sekundären Referenz-IPG-Spanne für den Referenz-Plan zu berechnen und andererseits eine modifizierten sekundären IPG-Spanne für einen modifizierten Plan zum Laden der Brennstoffanordnungen (16) in den Reaktorkern (2) zu berechnen
- ein Vergleichsmodul (46), welches dazu eingerichtet ist, die modifizierte sekundäre IPG-Spanne mit der sekundären Referenz-IPG-Spanne zu vergleichen,
wobei das Vergleichsmodul (46) ferner dazu eingerichtet ist, eine modifizierte Haupt-IPG-Spanne für den modifizierten Plan in Abhängigkeit von dem Vergleich der modifizierten sekundären IPG-Spanne mit der sekundären Referenz-IPG-Spanne zu berechnen.

## Claims

1. A method for calculating a pellet-cladding interaction PCI margin associated with a loading pattern of a nuclear reactor (1) comprising a core (2) in which fuel assemblies (16) are loaded according to the loading pattern, the fuel assemblies (16) comprising fuel rods (24) each including nuclear fuel pellets (36) and a cladding (33) surrounding the pellets (36),
the method being implemented by an electronic system (40) and comprising the following steps:
- b) calculating (100) a reference principal PCI margin for a reference loading pattern of the fuel assemblies (16) in the core (2),
- c) calculating (110) a reference secondary PCI margin for the reference pattern,
- d) calculating (120) a modified secondary PCI margin for a modified loading pattern of the fuel assemblies (16) in the core (2),
- e) calculating (130) a modified principal PCI margin for the modified pattern, depending on a comparison of the modified secondary PCI margin with the reference secondary PCI margin.

2. The method according to claim 1, wherein when the modified secondary PCI margin is greater than or equal to the reference secondary PCI margin, the modified principal PCI margin is equal to the reference principal PCI margin, and
when the modified secondary PCI margin is less than the reference secondary PCI margin, the modified principal PCI margin is less than the reference principal PCI margin.

3. The method according to claim 2, wherein, when the modified secondary PCI margin is less than the reference secondary PCI margin, the modified principal PCI margin is equal to the reference principal PCI margin reduced by a corrective factor depending on the deviation between the modified secondary PCI margin and the reference secondary PCI margin.

4. The method according to claim 3, wherein the corrective factor depends on a ratio between the modified secondary PCI margin and the reference secondary PCI margin and is strictly between 0 and 1.

5. The method according to any one of the preceding claims, wherein step b) comprises the following sub-steps:
b1) simulating at least one operating transient of the nuclear reactor (1),
b2) calculating the value reached by at least one physical quantity (G) during the operating transient in at least part of a cladding (33) of a fuel rod (24), and
b3) determining, as reference principal PCI margin, the deviation between the maximum value reached by said value calculated in sub-step b2) during the transient and a technological limit of the fuel rod (24).

6. The method according to claim 5, wherein the transient simulated in sub-step b1) is a transient chosen from among the group consisting of:
- an excessive load increase,
- an uncontrolled withdrawal of at least one group of control clusters (20),
- a fall of one of the control clusters (20), and
- an uncontrolled boric acid dilution.

7. The method according to claim 5 or 6, wherein the method comprises, before step b), the following step:
a) determining a rupture value (G_{RUP}, DEDᵣᵤₚ) of the physical quantity (G, DED) characterizing a rupture of the cladding (33).

8. The method according to claim 7, wherein step a) includes:
- subjecting previously irradiated fuel rods (24) to experimental nuclear power ramps,
- calculating the values (G_{MAX}, DED_{MAX}) reached by the physical quantity (G, DED) in at least one cladding (33) broken during a power ramp, and
- selecting the rupture value (G_{RUP}, DED_{RUP}) as being the minimum value from among the calculated values reached.

9. The method according to claim 7 or 8, wherein each of steps c) and d) includes, for each fuel assembly (16), the following sub-steps:
i) simulating an evolution of the operation of the nuclear reactor (1) by applying, to the fuel rods (24), a nuclear power ramp from the nil power,
ii) calculating the values (DED_{MAX}) reached by a physical quantity (DED) in the claddings (33) of the fuel rods (24),
iii) comparing the values reached (DED_{MAX}) to the rupture value (DED_{RUP}),
iv) determining a power at break equal to:
I) the power associated with the rupture value (DED_{RUP}), if a minimum value from among the values reached (DED_{MAX}) calculated in sub-step ii) is equal to the rupture value (DED_{RUP}), or
II) infinity, if no value, from among the values reached (DED_{MAX}) calculated in sub-step ii), is equal to the rupture value (DED_{RUP}),
v) evaluating a power margin by difference between the power at break determined in sub-step iv) and an estimated maximum power in the fuel assembly (16),
the corresponding secondary PCI margin, calculated during each of steps c) and d), being equal to the minimum margin from among the power margins evaluated for the fuel assemblies (16) in sub-step v).

10. The method according to any one of the preceding claims, wherein neutronic calculations and thermodynamic calculations are done to calculate each PCI margin, and
wherein the neutronic calculations and the thermomechanical calculations are coupled to calculate a corresponding principal PCI margin, the thermomechanical calculations being uncoupled from the neutronic calculations to calculate a corresponding secondary PCI margin.

11. The method according to any one of the preceding claims, wherein the method further comprises the following step:
f) determining a limit value to trigger an emergency stop and/or an alarm from the calculated principal PCI margin and for the considered loading pattern of the fuel assemblies (16) in the core (2).

12. The method according to any one of the preceding claims, wherein the physical quantity is chosen from among the group consisting of:
- a constraint or a constraint function in the cladding (33); and
- a deformation energy density in the cladding (33).

13. The method according to any one of the preceding claims, wherein the method further comprises:
operating the nuclear reactor (1) by using the calculated principal PCI margin for the considered loading pattern of the fuel assemblies (16) in the core (2).

14. A computer program comprising software instructions which, when executed by a computer, carry out a method according to any one of the preceding claims.

15. An electronic system (40) for calculating a PCI margin associated with a loading pattern of a nuclear reactor (1) comprising a core (2) in which fuel assemblies (16) are loaded according to the loading pattern, the fuel assemblies (16) comprising fuel rods (24) each including nuclear fuel pellets (36) and a cladding (33) surrounding the pellets (36),
the system (40) comprising:
- a first calculating module (42) configured to calculate a reference principal PCI margin for a reference loading pattern of the fuel assemblies (16) in the core (2),
- a second calculating module (44) configured to calculate, on the one hand, a reference secondary PCI margin for the reference pattern, and on the other hand, a modified secondary PCI margin for a modified loading pattern of the fuel assemblies (16) in the core (2),
- a comparison module (46) configured to compare the modified secondary PCI margin with the reference secondary PCI margin,
the comparison module (46) further being configured to calculate a modified principal PCI margin for the modified pattern, depending on said comparison of the modified secondary PCI margin with the reference secondary PCI margin.
